# FASCICULE DE BREVET EUROPEEN

(11) **EP 4 543 666 B1**
(45) Date de publication et mention de la délivrance du brevet: **20.05.2026**
(21) Numéro de dépôt: 23736790.9
(22) Date de dépôt: 16.06.2023
(51) Int. Cl.: B29C 70/22, B29B 11/16, B29C 70/24, B29C 70/44, B29C 70/48, B29C 70/86, B29D 99/00, B32B 5/26, B60G 7/00, B64C 25/02, B64C 25/10, D03D 15/275, D03D 15/37, D03D 25/00, F16C 7/02, F16C 11/04, B29B 11/14, B29K 105/08, B29L 31/30

(54) **PROCÉDÉ DE FABRICATION D'UN RENFORT FIBREUX D'UNE PIÈCE EN MATÉRIAU COMPOSITE**
VERFAHREN ZUR HERSTELLUNG EINER FASERVERSTÄRKUNG FÜR EIN VERBUNDWERKSTOFFTEIL
METHOD FOR MANUFACTURING A FIBROUS REINFORCEMENT FOR A COMPOSITE MATERIAL PART

(30) Priorité: 22.06.2022 FR 2206170
(43) Date de publication de la demande: 30.04.2025
(73) Titulaire: Safran Landing Systems, 78140 Vélizy-Villacoublay (FR); SAFRAN, 75015 Paris (FR)
(72) Inventeur: LECLERCQ, Sylvain, Didier, 77550 MOISSY-CRAMAYEL (FR); ROIRAND, Quentin, 77550 MOISSY-CRAMAYEL (FR); COUPE, Dominique, Marie, Christian, 77550 MOISSY-CRAMAYEL (FR); TRAN, Nicolas, 77550 MOISSY-CRAMAYEL (FR); DEL SORBO, Pietro, 77550 MOISSY-CRAMAYEL (FR)
(74) Mandataire: Cabinet Beau de Loménie
(86) Numéro de dépôt international: PCT/FR2023/050872
(87) Numéro de publication internationale: WO 2023/247865

(56) Documents cités:
- EP-A1- 1 736 674
- FR-A1- 3 106 519
- FR-A1- 3 116 545
- JP-A- 2015 086 491
- US-A- 5 130 188

## Description

### Domaine Technique

L'invention a pour objet une préforme fibreuse destinée à former une partie d'un renfort fibreux d'une pièce en matériau composite laquelle pièce est destinée à être articulée avec d'autres pièces à ses extrémités, et un procédé de fabrication associé.

### Technique antérieure

L'emploi de matériaux composites en remplacement de matériaux métalliques peut être proposé dans une optique d'allègement, ce qui est une préoccupation constante dans le cas particulier de pièces d'aéronef. Dans cette vue, le document US 7 704 429 a proposé la fabrication de contrefiches de train d'atterrissage en matériau composite qui comprennent des régions, dites chapes, qui sont destinées à l'articulation et aux introductions d'effort avec d'autres pièces et sont formées par une structure stratifiée avec intercalation de plis entre des plis primaires prolongeant le corps du renfort. Cette solution peut néanmoins présenter des inconvénients. En effet, les chapes qui ont une configuration laminée peuvent conduire à une augmentation de la taille des zones d'introduction d'effort par rapport aux pièces métalliques afin d'éviter le risque de délamination. Le gain de masse du système global devient alors moins intéressant et l'intégration de la pièce plus contraignante du fait d'un encombrement accru. Un autre problème est que la technique de fabrication proposée met en œuvre une intervention manuelle significative qui peut aboutir à des non-conformités et à une augmentation du coût. Enfin les performances mécaniques du matériau composite proposé dans ce document peuvent être améliorées, notamment en termes de tenue à la compression sur une zone médiane de la longueur de la pièce dite zone courante. Une option pour répondre à cela est d'ajouter de la matière en zone courante ce qui pénalise alors la masse et n'apporte donc pas complètement satisfaction.

L'invention propose de répondre à tout ou partie des inconvénients précités. EP 1 736 674 A1 concerne un procédé de fabrication d'un renfort fibreux d'une pièce en matériau composite.

### Exposé de l'invention

L'invention concerne un procédé selon la revendication 1.

Un exemple qui va au-delà de l'objet revendiqué concerne une préforme fibreuse d'une partie d'âme d'un renfort fibreux pour une pièce en matériau composite, la préforme ayant une forme élancée le long d'une direction longitudinale et étant formée par des premiers fils s'étendant le long la direction longitudinale avec des deuxièmes fils transverses aux premiers fils, la préforme comprenant deux extrémités longitudinales destinées à une articulation avec d'autres pièces et une zone médiane située entre les extrémités longitudinales, chaque extrémité longitudinale ayant une épaisseur supérieure à une épaisseur de la zone médiane, la zone médiane comprenant une portion de raidissement comprenant des premiers fils non tissés et chaque extrémité longitudinale comprenant un tissage tridimensionnel des premiers fils de cette portion de raidissement avec des deuxièmes fils.

L'invention propose une conception optimisée d'une préforme d'âme d'un renfort fibreux de type assemblage âme-ceinture qui est basée sur la technique de tissage tridimensionnel et sur des zones d'articulation en surépaisseur par rapport à la zone médiane, ou zone courante, afin d'obtenir une tenue améliorée aux zones d'introduction d'efforts. La portion de raidissement permet d'améliorer notablement la performance en compression de la zone médiane par rapport à une structure intégralement obtenue par tissage tridimensionnel. L'invention limite, voire évite, également le tissage avec des deuxièmes fils dans la zone médiane ce qui réduit la consommation de matière ainsi que les traitements postérieurs à l'opération textile tels que des découpes. Les premiers fils de la portion de raidissement sont tissés par tissage tridimensionnel sur les extrémités longitudinales de sorte à obtenir la tenue aux efforts souhaitée dans les zones d'articulation.

Dans un exemple de réalisation, la préforme fibreuse comprend des peaux tissées situées de part et d'autre de la portion de raidissement avec maintien des premiers fils de cette portion de raidissement par des fils provenant desdites peaux tissées. Une telle caractéristique permet avantageusement d'améliorer la tenue à l'impact du renfort fibreux.

En particulier, les peaux tissées peuvent comprendre des portions fibreuses latérales déliées rabattues formant, sur des côtés supérieur et inférieur de la préforme, une surface de positionnement pour une texture fibreuse de ceinture.

Une telle caractéristique participe à améliorer la qualité de l'interface entre l'âme et la ceinture et à améliorer davantage encore les performances mécaniques de la pièce.

Dans un exemple de réalisation, la préforme comprend en outre, entre chaque extrémité longitudinale et la zone médiane, une zone de transition comprenant des couches supplémentaires de premiers fils par rapport à celles présentes dans la zone médiane qui sont tissées avec des deuxièmes fils dans les extrémités longitudinales. Une telle caractéristique permet avantageusement d'atteindre une augmentation d'épaisseur dans les extrémités longitudinales plus importante et donc d'améliorer davantage encore les propriétés mécaniques de la pièce.

Dans un exemple de réalisation, la préforme est en fils de carbone.

L'invention vise un procédé de fabrication d'un renfort fibreux d'une pièce en matériau composite, comprenant :
- le positionnement d'une texture fibreuse tissée de ceinture sur une préforme d'une partie d'âme telle que décrite plus haut, la texture de ceinture définissant une boucle autour de la préforme de la partie d'âme de sorte à définir, aux extrémités longitudinales, des espaces libres destinés à une articulation avec d'autres pièces. Dans un exemple de réalisation, la texture de ceinture est en fils de carbone. L'invention vise également un procédé de fabrication d'une pièce composite destinée à être articulée avec d'autres pièces, comprenant :
- la formation d'un renfort fibreux tel que décrit plus haut, et
- la formation d'une matrice dans une porosité du renfort fibreux ainsi obtenu.

Dans un exemple de réalisation, la matrice est une matrice organique.

Dans un exemple de réalisation, la pièce est une contre-fiche de train d'atterrissage, une partie d'une contre-fiche de train d'atterrissage ou une barre de frein.

### Brève description des dessins

[Fig. 1] La figure 1 représente schématiquement un exemple de texture fibreuse destinée à former une préforme selon l'invention.
[Fig. 2] La figure 2 représente, de manière schématique, une section transversale de la texture de la figure 1.
[Fig. 3A] La figure 3A représente, de manière schématique et partielle, une première étape d'une mise en forme possible pour la texture des figures 1 et 2.
[Fig. 3B] La figure 3B représente, de manière schématique et partielle, une deuxième étape d'une mise en forme possible pour la texture des figures 1 et 2.
[Fig. 3C] La figure 3C représente, de manière schématique et partielle, une troisième étape d'une mise en forme possible pour la texture des figures 1 et 2 ainsi que le positionnement de la ceinture.
[Fig. 4] La figure 4 est une vue en perspective d'un exemple de renfort fibreux de type assemblage âme-ceinture selon l'invention.

### Description des modes de réalisation

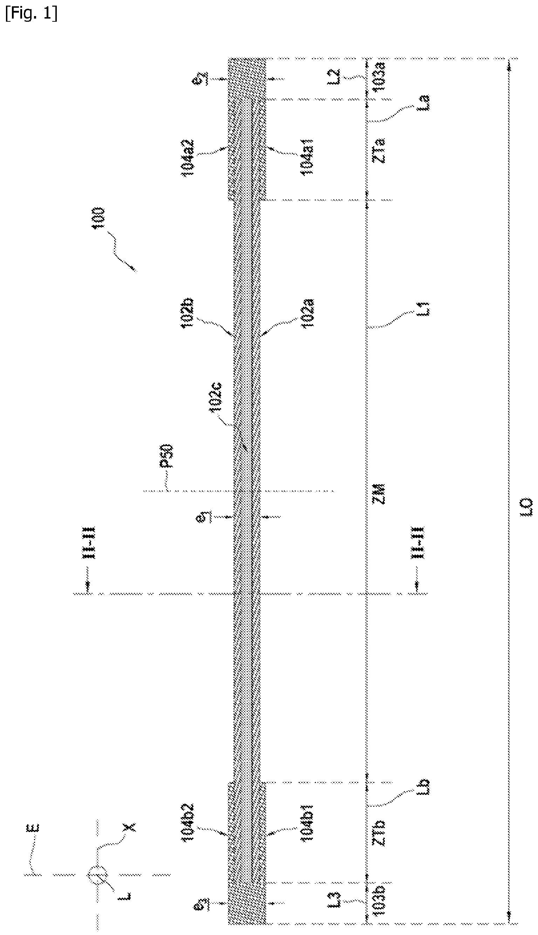

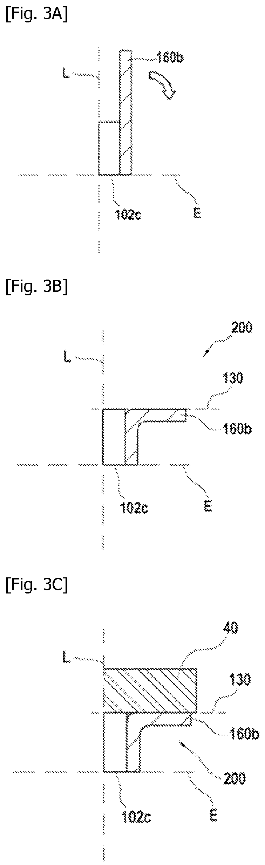

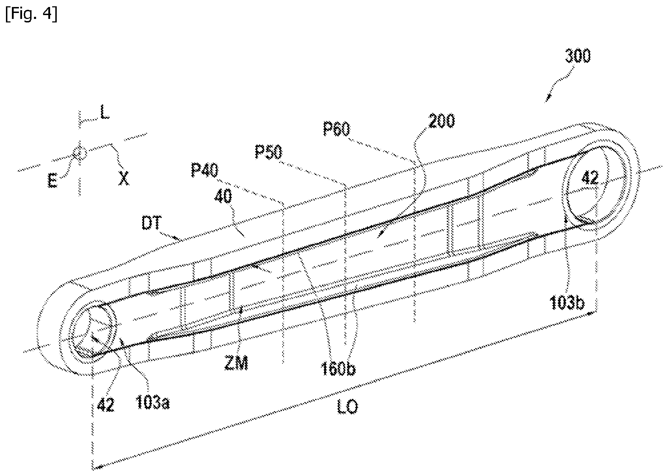

La figure 1 représente une texture fibreuse 100 tissée qui est destinée à former, après mise en forme, une préforme fibreuse 200 (voir figures 3B, 3C et 4) d'une âme d'un renfort fibreux pour pièce en matériau composite. Une mise en forme possible pour la texture sera décrite dans la suite en lien avec les figures 3A à 3C. La texture 100 et la préforme 200 ont une forme élancée en s'étendant le long d'une direction longitudinale X et peuvent être obtenues par tissage en une seule pièce. La texture 100 et la préforme 200 comprennent successivement le long de la direction X une première extrémité longitudinale 103a, une zone médiane ZM et une deuxième extrémité longitudinale 103b. Dans l'exemple illustré, il y a également présence d'une première zone de transition ZTa entre la première extrémité 103a et la zone médiane ZM et d'une deuxième zone de transition ZTb entre la zone médiane ZM et la deuxième extrémité 103b. La présence des zones de transition ZTa et ZTb est envisagée dans l'exemple illustré mais demeure optionnelle dans le cadre de l'invention. Selon un exemple, chaque zone de transition ZTa, ZTb éventuellement présente peut avoir une longueur La, Lb comprise entre 1% et 20% de la longueur LO de la texture 100 ou de la préforme 200, et chaque extrémité 103a, 103b peut avoir une longueur L2, L3 comprise entre 1% et 20% de la longueur LO. Les longueurs sont mesurées le long de la direction X. La zone médiane ZM peut être centrée par rapport à un plan P50 situé à mi-longueur de la texture 100 ou de la préforme 200 et perpendiculaire à la direction X. Dans l'exemple illustré à la figure 1, l'épaisseur e2 de la première extrémité 103a est supérieure à l'épaisseur e1 de la zone médiane ZM. L'épaisseur e3 de la deuxième extrémité 103b est inférieure à l'épaisseur e2 mais supérieure à l'épaisseur e1. Les épaisseurs sont mesurées le long de la direction d'épaisseur (direction E) et correspondent à la plus petite dimension. Selon un exemple, le rapport e2 / e1 peut être supérieur à 1 et inférieur ou égal à 4, par exemple compris entre 1,5 et 2,5, et le rapport e3 / e1 peut être supérieur à 1 et inférieur ou égal à 4, par exemple compris entre 1,5 et 2,5.

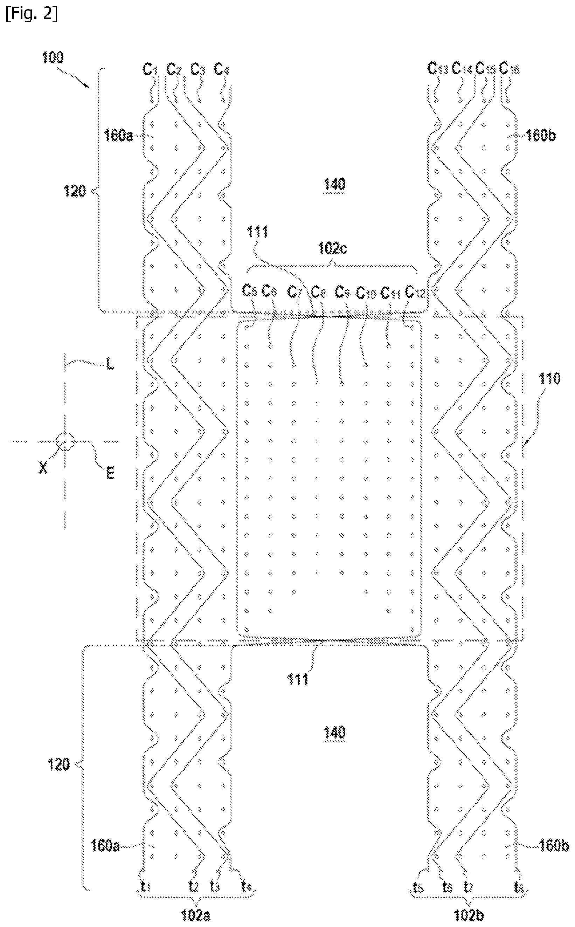

L'architecture textile diffère entre les extrémités 103a, 103b, les zones de transition ZTa, ZTb et la zone médiane ZM comme il va être détaillé dans la suite. Les extrémités 103a, 103b sont obtenues par tissage tridimensionnel de premiers fils qui s'étendent le long de la direction X avec des deuxièmes fils transverses aux premiers fils, par exemple avec une armure de tissage « interlock ». Dans l'exemple illustré, une partie des premiers fils présents dans les extrémités 103a, 103b forment, dans la zone médiane ZM, une portion de raidissement 102c et ne sont pas tissés avec des deuxièmes fils dans cette portion 102c. Les premiers fils peuvent s'étendre, dans la portion de raidissement 102c, de manière sensiblement rectiligne. La portion de raidissement 102c peut comprendre des couches unidirectionnelles de premiers fils. D'une manière générale, les premiers fils non tissés peuvent être majoritaires en nombre (plus de 50%) dans la zone médiane ZM, par exemple représenter au moins 80% en nombre de l'ensemble des fils présents dans la zone médiane ZM. Des deuxièmes fils sont ajoutés dans les extrémités longitudinales 103a, 103b de sorte à tisser les premiers fils de la portion de raidissement 102c. Ces deuxièmes fils ajoutés correspondent à des couches de fils supplémentaires par rapport aux couches de deuxièmes fils éventuellement présentes dans la zone médiane ZM. La figure 2 illustre une vue, en section transversale, par rapport à la direction X, d'une configuration textile possible au niveau de la zone médiane ZM. La texture 100 comprend une portion centrale 110 présentant, sur ses côtés opposés 111, deux bords 120 de positionnement qui comprennent chacun des portions latérales 160a, 160b déliées séparées par une zone de déliaison 140 permettant un écartement de ces portions 160a, 160b l'une par rapport à l'autre. Les bords 120 de positionnement et la portion centrale 110 sont décalés le long de la direction L de la largeur, et les portions déliées 160a, 160b sont décalées le long de la direction E d'épaisseur. La portion centrale 110 comprend la portion de raidissement 102c comprenant les premiers fils C5-C12 non tissés. Des peaux 102a, 102b tissées, par exemple obtenues par tissage tridimensionnel, par exemple par tissage « interlock », sont présentes dans la portion centrale 110 et s'étendent au-delà de celle-ci de sorte à former les portions déliées 160a, 160b. Les peaux 102a, 102b sont formées d'un tissage entre des premiers fils C1-C4 et C13-C16 s'étendant le long de la direction longitudinale X avec des deuxièmes fils t1-t8 s'étendant le long de la direction L. D'une manière générale, on reconnaîtra que le nombre de couches de fils ainsi que l'armure de tissage illustrés ne sont fournis qu'à titre d'exemple et peuvent être modifiés sans s'écarter du périmètre de l'invention. Les peaux 102a, 102b sont situées dans la zone médiane ZM et leur prolongement définit dans les extrémités 103a, 103b une même pièce de tissu s'étendant sur toute la largeur et l'épaisseur de la texture 100 ou de la préforme 200. Les fils C5-C12 de la portion de raidissement 102c sont situés entre les peaux 102a, 102b et maintenus ensemble par des fils provenant de celles-ci. En effet, on constate que le fil t4 s'étend dans la première peau 102a en dehors de la portion centrale 110 et est dévié afin de sortir de cette première peau 102a pour lier l'ensemble 102c de fils C5-C12 dans la portion centrale 110. De même, le fil t5 s'étend dans la deuxième peau 102b en dehors de la portion centrale 110 et est dévié afin de sortir de cette deuxième peau 102b pour lier l'ensemble 102c de fils C5-C12 dans la portion centrale 110 du côté opposé au fil t4. On obtient ainsi une encapsulation de la portion de raidissement 102c formée par les fils C5-C12 entre les peaux 102a, 102b, ces fils C5-C12 étant maintenus en place par les fils déviés t4-t5. Dans l'exemple illustré, on a dans la portion centrale 110 successivement le long de la direction d'épaisseur E : la première peau 102a, la portion 102c de fils non-tissés et la deuxième peau 102b. On notera que la portion 102c de fils non-tissés n'est présente que dans la portion centrale 110 et pas dans les bords 120 de positionnement. Ceci permet une économie de fil dans cette zone et d'éviter une étape manuelle de découpe si ces fils étaient tissés. Comme indiqué plus haut, les fils C5-C12 ne sont pas tissés sur une partie seulement de la longueur de la première texture 100 ou de la préforme 200, sur sa zone médiane ZM et éventuellement sur les zones de transition ZTa, ZTb, et sont tissés dans les extrémités longitudinales 103a, 103b. La longueur où les fils C5-C12 sont non-tissés peut être supérieure ou égale à 50%, par exemple à 75%, de la longueur LO de la texture 100 ou de la préforme 200.

Les figures 3A à 3C illustrent, de manière simplifiée, la mise en forme de la texture 100 des figures 1 et 2 afin d'obtenir la préforme 200 ainsi que le positionnement de la deuxième texture 40 de ceinture, étant entendu que la configuration est symétrique par rapport aux directions L et E. Dans l'exemple considéré, il y a déploiement des portions déliées 160a, 160b sur une forme (non illustrée) de sorte à former un angle sensiblement de 90° avec la direction L et à positionner les portions déliées 160a, 160b à la hauteur de la portion 102c. Cette hauteur est prise le long de la direction L. On obtient ainsi une préforme 200 présentant une surface de positionnement 130 de forme sensiblement plane avec, au même niveau, les portions déliées 160a, 160b ainsi que la portion 102c qui est située entre ces portions déliées et définit ainsi une surface d'appui pour la texture de ceinture 40. La préforme 200 peut avoir une forme en I (dite forme en double cornière) en section transversale par rapport à la direction longitudinale X. Dans l'exemple de la figure 1, il y a entre la zone médiane ZM et les extrémités 103a, 103b une zone de transition ZTa, ZTb. La portion de raidissement 102c est présente également dans les zones de transition ZTa, ZTb mais les peaux 104a1, 104a2, 104b1 et 104b2 sont épaissies par rapport aux peaux 102a, 102b de la zone médiane ZM. En effet, il y a apport dans cette zone de couches de premiers fils supplémentaires par rapport à ceux présents dans la zone médiane ZM. Les couches de premiers fils apportées dans cette zone peuvent, comme illustré, être tissées progressivement avec des deuxièmes fils de sorte à former les peaux 104a1, 104a2, 104b1 et 104b2 et se prolonger dans les extrémités 103a, 103b afin d'obtenir l'épaisseur souhaitée pour celles-ci lorsqu'une surépaisseur notable est recherchée.

La figure 4 représente un exemple d'assemblage âme-ceinture selon l'invention formant le renfort fibreux 300 de la pièce à obtenir. La texture 40 tissée de ceinture a été positionnée autour de la préforme 200 obtenue après mise en forme de la texture 100 par rabattement des portions déliées 160a, 160b. La texture 40 peut avoir une forme de bande qui est enroulée autour de la préforme 1. Lors de son positionnement, la texture 40 vient en appui sur la surface 130 de positionnement.

La texture 40 peut se présenter sous la forme d'une même bande de tissu mais on ne sort pas du cadre de l'invention si elle est sous la forme de plusieurs bandes mises bout à bout ou côte à côte. La texture 40 peut également être obtenue par tissage tridimensionnel, par exemple avec une armure « interlock ». La texture 40 définit une boucle fermée autour de la préforme 200 et définit des espaces libres 42 destinés à l'articulation avec les autres pièces. On peut provisoirement utiliser des inserts (non représentés) au niveau des extrémités longitudinales 103a, 103b et enrouler la deuxième texture 40 autour de ces derniers de sorte à garantir la forme souhaitée pour les régions d'extrémité. Les extrémités 103a, 103b peuvent comme illustré avoir une forme incurvée, par exemple sensiblement circulaire. La dimension transversale DT de la surface 130 de positionnement est croissante depuis la première extrémité 103a jusqu'à la zone médiane ZM, maximale au voisinage du plan P50 de mi-longueur de la préforme 200 par exemple au moins sur le tronçon situé entre les plans P40 et P60 situés à 40% et à 60% de la longueur LO et perpendiculaires à la direction X, puis décroissante en direction de la deuxième extrémité 103b. La surface 130 de positionnement définit des ailettes latérales pour le positionnement de la texture 40 de ceinture. Les rapports volumiques entre les fils de chaîne et de trame de chacune de la préforme 200 et de la texture 40 de ceinture peuvent être similaires, par exemple avec un écart d'au plus 10%. Ces rapports volumiques correspondent au rapport : [volume occupé par les fils de chaîne]/[volume occupé par les fils de trame] pour chaque textile considéré.

On réalise alors une densification de l'ensemble de la préforme 200 et de la texture 40, par exemple par introduction d'une résine, comme une résine époxy, suivie d'une réticulation de celle-ci s'il s'agit d'une résine thermodurcissable ou d'un refroidissement s'il s'agit d'une résine thermoplastique. La formation de la matrice peut être réalisée par technique de moulage par transfert de résine (« Resin Transfer Molding ») qui correspond à une technique connue en soi. On obtient ainsi une pièce en matériau composite destiné à être articulée avec d'autres pièces à ses extrémités longitudinales et à subir des efforts de traction et de compression. Le renfort fibreux de la pièce peut être formé de fils de carbone et la pièce peut présenter une matrice organique comme il vient d'être décrit. La pièce peut ou non être destinée à une application aéronautique. La pièce peut par exemple être une bielle, une contre-fiche de train d'atterrissage ou un élément constitutif de celle-ci, ou encore une barre de frein. La pièce obtenue peut être montée à d'autres pièces en positionnant au travers des espaces libres 42 un axe d'articulation pour la liaison à d'autres pièces ainsi qu'un insert de contact avec cet axe.

## Revendications

1. Procédé de fabrication d'un renfort fibreux (300) d'une pièce en matériau composite, comprenant :
- le positionnement d'une texture fibreuse (40) tissée de ceinture sur une préforme fibreuse (200) d'une partie d'âme d'un renfort fibreux (300) pour une pièce en matériau composite, la préforme ayant une forme élancée le long d'une direction longitudinale (X) et étant formée par des premiers fils (C1-C16) s'étendant le long la direction longitudinale avec des deuxièmes fils (t1-t8) transverses aux premiers fils, la préforme comprenant deux extrémités longitudinales (103a ; 103b) destinées à une articulation avec d'autres pièces et une zone médiane (ZM) située entre les extrémités longitudinales, chaque extrémité longitudinale ayant une épaisseur (e2 ; e3) supérieure à une épaisseur (e1) de la zone médiane, la zone médiane comprenant une portion de raidissement (102c) comprenant des premiers fils (C5-C12) non tissés et chaque extrémité longitudinale comprenant un tissage tridimensionnel des premiers fils de cette portion de raidissement avec des deuxièmes fils, la texture de ceinture définissant une boucle autour de la préforme de la partie d'âme de sorte à définir, aux extrémités longitudinales, des espaces libres (42) destinés à une articulation avec d'autres pièces.

2. Procédé selon la revendication 1, dans laquelle la préforme fibreuse comprend des peaux tissées (102a ; 102b) situées de part et d'autre de la portion de raidissement (102c) avec maintien des premiers fils (C5-C12) de cette portion de raidissement par des fils (t4 ; t5) provenant desdites peaux tissées.

3. Procédé selon la revendication 2, dans laquelle les peaux tissées (102a ; 102b) comprennent des portions fibreuses (160a ; 160b) latérales déliées rabattues formant, sur des côtés (111) supérieur et inférieur de la préforme, une surface (130) de positionnement pour une texture (40) fibreuse de ceinture.

4. Procédé selon l'une quelconque des revendications 1 à 3, dans laquelle la préforme comprend en outre, entre chaque extrémité longitudinale (103a ; 103b) et la zone médiane (ZM), une zone de transition (ZTa ; ZTb) comprenant des couches supplémentaires de premiers fils par rapport à celles présentes dans la zone médiane qui sont tissées avec des deuxièmes fils dans les extrémités longitudinales.

5. Procédé selon l'une quelconque des revendications 1 à 4, dans laquelle la préforme est en fils de carbone.

6. Procédé selon l'une quelconque des revendications 1 à 5, dans lequel la texture de ceinture (40) est en fils de carbone.

7. Procédé de fabrication d'une pièce composite destinée à être articulée avec d'autres pièces, comprenant :
- la formation d'un renfort fibreux (300) selon l'une quelconque des revendications 1 à 6, et
- la formation d'une matrice dans une porosité du renfort fibreux ainsi obtenu.

8. Procédé selon la revendication 7, dans lequel la matrice est une matrice organique.

9. Procédé selon la revendication 7 ou 8, dans lequel la pièce est une contre-fiche de train d'atterrissage, une partie d'une contre-fiche de train d'atterrissage ou une barre de frein.

## Patentansprüche

1. Verfahren zur Herstellung einer Faserverstärkung (300) eines Teils aus Verbundmaterial, umfassend:
- die Positionierung einer gewebten Gürtel-Fasertextur (40) auf einer Faservorform (200) eines Steg-Teils einer Faserverstärkung (300) für einen Teil aus Verbundmaterial, wobei die Vorform eine entlang einer Längsrichtung (X) langgestreckte Form aufweist und aus ersten Fäden (C1-C16), die sich entlang der Längsrichtung erstrecken, mit zweiten Fäden (t1-t8) quer zu den ersten Fäden gebildet ist, wobei die Vorform zwei Längsenden (103a; 103b), die für eine gelenkige Verbindung mit anderen Teilen bestimmt sind, und eine Medianzone (ZM) umfasst, die sich zwischen den Längsenden befindet, wobei jedes Längsende eine Dicke (e2; e3) aufweist, die größer ist als eine Dicke (e1) der Medianzone, wobei die Medianzone einen Versteifungsabschnitt (102c) umfasst, der nicht verwebte erste Fäden (C5 - C12) umfasst, und jedes Längsende eine dreidimensionale Verwebung der ersten Fäden dieses Versteifungsabschnitts mit zweiten Fäden umfasst, wobei die Gürteltextur eine Schleife um die Vorform des Steg-Teils auf solche Weise bildet, dass an den Längsenden freie Räume (42) definiert werden, die für eine gelenkige Verbindung mit anderen Teilen bestimmt ist.

2. Verfahren nach Anspruch 1, wobei die Faservorform gewebte Häute (102a; 102b) umfasst, die sich auf beiden Seiten des Versteifungsabschnitts (102c) befinden, wobei die ersten Fäden (C5-C12) dieses Versteifungsabschnitts von Fäden (t4; t5), die von den gewebten Häuten stammen, gehalten werden.

3. Verfahren nach Anspruch 2, wobei die gewebten Häute (102a; 102b) seitliche, unverbundene, zurückgeschlagene faserige Abschnitte (160a; 160b) umfassen, welche an der oberen und unteren Seite (111) der Vorform eine Positionierungs-Oberfläche (130) für eine Gürtel-Fasertextur (40) definieren.

4. Verfahren nach einem der Ansprüche 1 bis 3, wobei die Vorform ferner zwischen jedem Längsende (103a; 103b) und der Medianzone (ZM) eine Übergangszone (ZTa; ZTb) umfasst, die in Bezug auf die in der Medianzone vorhandenen zusätzliche Schichten von ersten Fäden umfassen, die mit zweiten Fäden in den Längsenden verwebt sind.

5. Verfahren nach einem der Ansprüche 1 bis 4, wobei die Vorform aus Kohlenstofffäden besteht.

6. Verfahren nach einem der Ansprüche 1 bis 5, wobei die Gürteltextur (40) aus Kohlenstofffäden besteht.

7. Verfahren zur Herstellung eines Verbundteils, das dazu bestimmt ist, mit anderen Teilen gelenkig verbunden zu werden, umfassend:
- die Bildung einer Faserverstärkung (300) nach einem der Ansprüche 1 bis 6, und
- die Bildung einer Matrix in einer Porosität der so erhaltenen Faserverstärkung.

8. Verfahren nach Anspruch 7, wobei die Matrix eine organische Matrix ist.

9. Verfahren nach Anspruch 7 oder 8, wobei das Teil eine Strebe eines Fahrwerks, ein Teil einer Strebe eines Fahrwerks oder eine Bremsstange ist.

## Claims

1. A method for manufacturing a fibrous reinforcement (300) of a composite material part, comprising:
- positioning a woven fibrous belt texture (40) on a fibrous preform (200) of a core portion of a fibrous reinforcement (300) for a composite material part, the preform having an elongated shape along a longitudinal direction (X) and being formed by first yarns (C1-C16) extending along the longitudinal direction with second yarns (t1-t8) transverse to the first yarns,
the preform comprising two longitudinal ends (103a; 103b) intended for articulation with other parts and a median area (ZM) located between the longitudinal ends, each longitudinal end having a thickness (e2; e3) greater than a thickness (e1) of the median area, the median area comprising a stiffening segment (102c) comprising first non-woven yarns (C5-C12) and each longitudinal end comprising a three-dimensional weave of the first yarns of this stiffening segment with second yarns, the belt texture defining a loop around the preform of the core portion so as to define, at the longitudinal ends, free spaces (42) intended for articulation with other parts.

2. The method according to claim 1, wherein the fibrous preform comprises woven skins (102a; 102b) located on either side of the stiffening segment (102c) with the first yarns (C5-C12) of this stiffening segment being held by yarns (t4; t5) coming from said woven skins.

3. The method according to claim 2, wherein the woven skins (102a; 102b) comprise folded, non-interlinked lateral fibrous segments (160a; 160b) forming, on upper and lower sides (111) of the preform, a positioning surface (130) for a fibrous belt texture (40).

4. The method according to any one of claims 1 to 3, wherein the preform further comprises, between each longitudinal end (103a; 103b) and the median area (ZM), a transition area (ZTa; ZTb) comprising additional layers of first yarns compared to those present in the median area which are woven with second yarns in the longitudinal ends.

5. The method according to any one of claims 1 to 4, wherein the preform is made of carbon yarns.

6. The method according to any one of claims 1 to 5, wherein the belt texture (40) is made of carbon yarns.

7. A method for manufacturing a composite part intended to be articulated with other parts, comprising:
- forming a fibrous reinforcement (300) according to any one of claims 1 to 6, and
- forming a matrix in a porosity of the fibrous reinforcement thus obtained.

8. The method according to claim 7, wherein the matrix is an organic matrix.

9. The method according to claim 7 or 8, wherein the part is a landing gear strut, a portion of a landing gear strut, or a brake bar.
